# EUROPÄISCHE PATENTANMELDUNG

(11) **EP 0 806 444 A2**
(43) Veröffentlichungstag der Anmeldung: **12.11.1997**
(21) Anmeldenummer: 97107125.3
(22) Anmeldetag: 30.04.1997
(51) Int. Cl.: C08G 18/32, C08G 18/79, C08J 9/42, C08J 5/24

(54) **Verfahren zur Herstellung von flächigen Polyurethan-Formteilen**

(30) Priorität: 08.05.1996 DE 19618390
(71) Anmelder: BASF AKTIENGESELLSCHAFT, 67056 Ludwigshafen (DE)
(72) Erfinder: Scherzer, Dietrich, Dr., 67433 Neustadt (DE); Jung, Ludwig, 82291 Mammendorf (DE); Bruchmann, Bernd, Dr., 67251 Freinsheim (DE); Renz, Hans, Dr., 67149 Meckenheim (DE)

(57) **Zusammenfassung**

Gegenstand der Erfindung ist ein Verfahren zur Herstellung von flächigen Polyurethanformkörpern durch Imprägnierung von porösen Flächengebilden mit einem Prepolymeren mit freien Isocyanatgruppen und reversibel verkappten, mit Isocyanatgruppen reaktiven Gruppen oder mit freien, mit Isocyanatgruppen reaktiven Gruppen und reversibel verkappten Isocyanatgruppen und anschließender Umsetzung der Prepolymeren in einer beheizten Form.

## Beschreibung

Die Erfindung betrifft ein Verfahren zur Herstellung von flächigen Polyurethan-Formteilen durch Imprägnierung von porösen, flächigen Materialien mit Prepolymeren und anschließende Umsetzung der Prepolymeren zu Polyurethanen.

Flächige Polyurethan-Formteile werden insbesondere für Innenverkleidungen von Fahrzeugen verwendet. Ihre Herstellung kann durch Imprägnierung von porösen, flächigen Materialien mit Polyurethansystemen und die nachfolgende Umsetzung dieser Systeme zu Polyurethanen erfolgen. Es können als Polyurethansysteme auch Isocyanate, beispielsweise in Form von Dispersionen, oder auch Isocyanatgruppen enthaltende Prepolymere eingesetzt werden, deren Isocyanatgruppen mit Wasser, wobei gegebenenfalls die Luftfeuchtigkeit und/oder die in den porösen, flächigen Materialien enthaltende Feuchtigkeit ausreichend ist, umgesetzt werden. Üblicherweise werden die porösen, flächigen Materialien zuerst in die Form eingebracht und dort mit dem vorgemischten Polyurethansystem durchtränkt.

Als poröse, flächige Materialien können hierbei synthetische Schaumstoffe, wie Polyurethan-Weich- oder Halbhartschäume, oder Gewebe, wie Glaswatte oder Gewebe aus natürlichen Fasern, wie Filze oder Pflanzenfasern, verwendet werden.

Zur Formgebung und zur Beschleunigung der Umsetzung werden die flächigen Gebilde nach dem Imprägnieren zumeist in eine beheizte Form gegeben. Bei diesem Arbeitsgang können die Formteile auch mit Kaschiermaterialien wie Folien oder Matten versehen werden. Dabei entstehen Formteile mit Sandwichstruktur.

Die bekannten Verfahren zur Herstellung von flächigen Polyurethan-Formteilen weisen Nachteile auf. Bei Verwendung von gelösten Isocyanaten kommt es zu einer Freisetzung von Lösungsmitteln. Zur Behebung dieses Mangels wird in EP-A-276 465 vorgeschlagen, wäßrige Isocyanat-Suspensionen zum Tränken der porösen Materialien zu verwenden. Bei diesem Verfahren kommt es jedoch zu relativ langen Entformzeiten, da das Verdampfen des Wassers viel Zeit benötigt.

Bei der Verwendung von Polyurethan-Systemen zur Herstellung von flächigen Formteilen ist es erforderlich, daß die Systeme eine hinreichend lange Topfzeit aufweisen, um ein Auf schäumen vor der vollständigen Imprägnierung des porösen Materials zu vermeiden. Die Viskosität solcher Polyurethansysteme ist zumeist sehr hoch. Dadurch kann es insbesondere bei Verwendung von flächigen Materialien auf Basis von Pflanzenfasern zu einer unvollständigen Imprägnierung der Polyurethansysteme kommen. Beim Durchtränken der Materialien in der Form kommt es zu Fließproblemen.

Aufgabe der Erfindung war es, ein einfaches und kostengünstiges Verfahren zur Herstellung von flächigen Polyurethan-Formteilen zu entwickeln, das die Nachteile des Standes der Technik vermeidet.

Die Aufgabe konnte überraschenderweise gelöst werden durch ein Verfahren zur Herstellung von flächigen Polyurethan-Formkörpern durch Imprägnierung eines porösen Flächengebildes mit einer Polyurethan-Aufbaukomponente und deren anschließende Umsetzung zum Polyurethan bei gleichzeitiger Formgebung in einer beheizbaren Form, dadurch gekennzeichnet, daß als Polyurethan-Aufbaukomponente ein Prepolymer mit endständigen Isocyanatgruppen und reversibel verkappten mit Isocyanat reaktiven Gruppen oder mit freien, mit Isocyanat reaktiven Gruppen und reversibel verkappten Isocyantgruppen verwendet wird.

Gegenstand der Erfindung ist demzufolge ein Verfahren zur Herstellung von flächigen Polyurethan-Formteilen durch Imprägnierung eines porösen Flächengebildes mit einer Polyurethan-Aufbaukomponente und deren anschließende Umsetzung zum Polyurethan bei gleichzeitiger Formgebung in einer beheizbaren Form, dadurch gekennzeichnet, daß als Polyurethan-Aufbaukomponente ein Prepolymer mit freien Isocyanatgruppen und reversibel verkappten mit Isocyanat reaktiven Gruppen oder mit freien, mit Isocyanat reaktiven Gruppen und reversibel verkappten Isocyantgruppen verwendet wird.

Die mit Isocyanat reaktiven Gruppen sind Gruppen mit Zerewitinoff-Wasserstoffatomen, insbesondere Hydroxylgruppen und primäre oder sekundäre Aminogruppe.

Die erfindungsgemäß verwendeten Prepolymere mit freien Isocyanatgruppen und reversibel verkappten Hydroxylgruppen können erhalten werden, indem man mindestens difunktionelle Isocyanate mit mindestens difunktionellen Alkoholen, bei denen mindestens eine Hydroxylgruppe reversibel verkappt ist, umsetzt. Dabei reagieren die freien Hydroxylgruppen mit den Isocyanatgruppen. Wenn man bei dem so erhaltenen Prepolymeren die Verkappung der Hydroxylgruppen löst, reagieren die nun freiwerdenden Hydroxylgruppen der Prepolymeren mit den Isocyanatgruppen der Prepolymeren zum Polyurethan.

Die Verkappungsmittel für die Hydroxylgruppen sind vorteilhafterweise so zu wählen, daß die Verkappung bei Wärme- und Dampfzufuhr, wie sie bei der Formgebung der flächigen Formteile auftritt, gelöst wird. Als besonders vorteilhaft hat sich eine Blockierung der Hydroxylgruppen durch Umsetzung mit Ketonen, insbesondere Aceton, erwiesen. Da hierbei zwei benachbarte Hydroxylgruppen mit einem Keton reagieren, sind hierbei mindestens dreifunktionelle Alkohole mit mindestens zwei benachbarten Hydroxylgruppen notwendig. Bevorzugte Vertreter sind Triole, insbesondere Glycerin und Trimethylolpropan (TMP).

Die Umsetzung der Triole mit Aceton verläuft sehr glatt. Die Reaktion soll am Beispiel der Umsetzung von Glycerin mit Aceton schematisch dargestellt werden.

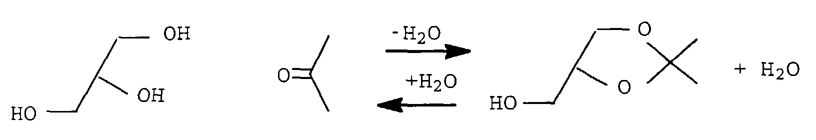

Das so verkappte Triol reagiert mit dem Isocyanat wie ein Monool. Die Isopropyliden-Gruppe kann durch Zuführung von Wasser und Temperatur unter Acetonabspaltung wieder in zwei Hydroxylgruppen umgewandelt werden, die mit den freien Isocyanatgruppen des Prepolymeren reagieren. Durch Zugabe von Lewis- oder Brönstedt-Säuren kann der Zerfall der Isopropyliden-Gruppe beschleunigt werden. Es ist besonders vorteilhaft, das Verhältnis von verkappten Polyolgruppen zu freien Isocyanatgruppen im Prepolymeren so einzustellen, daß ein stöchiometrischer Umsatz erfolgt.

Die erfindungsgemäß eingesetzten Prepolymeren sind praktisch unbegrenzt lagerstabil. Ihre Handhabung ist sehr einfach. Das bei den vorzugsweise verwendeten Verbindungen freiwerdende Aceton stellt aufgrund seiner geringen Menge keine Gefährdung oder Beeinträchtigung des Verfahrens dar.

Als Isocyanatkomponenten können die bekannten und gebräuchlichen Isocyanate verwendet werden, wie Toluylendiisocyanat, monomeres Diphenylmethandiisocyanat oder polymeres Diphenylmethandiisocyanat. Aufgrund der höheren Vernetzung wird zur Herstellung der erfindungsgemäßen Polyurethan-Komponenten vorzugsweise polymeres Diphenylmethandiisocyanat, sogenanntes Roh-MDI, verwendet.

Die erfindungsgemäß eingesetzten Prepolymeren mit freien Isocyanat-Gruppen und reversibel verkappten Aminogruppen können nach analogen Reaktionsmechanismus hergestellt werden. Die reversible Verkappung der Aminogruppen erfolgt vorzugsweise durch Umsetzungen mit Aldehyden oder Ketonen.

Es ist selbstverständlich auch möglich, für das erfindungsgemäße Verfahren solche Produkte mit endständigen Hydroxylgruppen und reversibel verkappten Isocyanatgruppen zu verwenden. Die reversible Verkappung der Isocyanatgruppen kann zum Beispiel durch Bildung von Uretdiongruppen durchgeführt werden.

Zur Beschleunigung der Reaktion zwischen den Isocyanat und Hydroxylgruppen können dem Prepolymeren übliche Urethanbildungskatalysatoren zugesetzt werden, wie tert. Amine oder metallorganische Verbindungen, insbesondere Dimethylhexylamin, Triethylendiamin, Dibutylzinndilaurat und Bleidioctoat. Diese entfalten ihre Wirksamkeit erst nach dem Lösen der Verkappung und beeinträchtigen die Lagerstabilität der Prepolymeren nicht.

Die flächigen Polyurethan-Formteile können mit Deckschichten, sogenannten Kaschierungen, versehen werden. Üblicherweise geschieht das, indem die Kaschierungen vor dem Einbringen der imprägnierten Flächengebilde in die Form eingelegt werden. Es ist auch möglich, das flächige, poröse Formgebilde nur teilweise zu imprägnieren oder eine imprägnierte Schicht zusammen mit nicht imprägnierten Schichten in die Form einzubringen.

Zu den Ausgangsprodukten des erfindungsgemäßen Verfahrens ist im einzelnen folgendes zu sagen:

Als poröse Flächengebilde können sowohl synthetische Produkte als auch Naturstoffe verwendet werden. Bei den synthetischen Produkten haben weiche und halbharte Schaumstoffe, insbesondere Polyurethanschaumstoffe, besondere Bedeutung. Um eine ausreichende Imprägnierung zu gewährleisten, ist ein hoher Gehalt an offenen Zellen erforderlich. Diese Anforderungen werden insbesondere von Polyurethan-Schaumstoffen erfüllt.

Weiterhin können als poröse Flächengebilde Glasfasermatten eingesetzt werden. Üblicherweise eingesetzte Glasfasermatten haben ein Flächengewicht von etwa 500 g/m³.

In letzter Zeit haben Flächengebilde aus natürlichen Fasern stark an Bedeutung gewonnen. Insbesondere Matten aus Pflanzenfasern, wie Flachs, Sisal oder Jute können vorteilhaft eingesetzt werden. Bei Verwendung derartiger Produkte ist das erfindungsgemäße Verfahren besonders vorteilhaft gegenüber denen des Standes der Technik, da diese Matten einen hohen Fließwiderstand gegenüber den Polyurethan-Komponenten aufweisen. Dadurch kommt es bei Verwendung von Polyurethansystemen oft dazu, daß das Polyurethansystem die Matten vor dem Einsetzen der Reaktion nicht vollständig durchdringen kann und die erhaltenen Formteile Inhomogenitäten aufweisen.

Das Imprägnieren des porösen Flächengebildes kann sowohl manuell, beispielsweise mit Bürsten oder Handrollen, als auch maschinell, beispielsweise durch Aufsprühen oder mit Kalandern, erfolgen.

Nach dem Imprägnieren werden die Flächengebilde in beheizbare Formen gegeben. Dort erfolgt die Lösung der Verkappung und die Polyurethanreaktion. Die Temperatur in den Formen beträgt 80 - 130°C, vorzugsweise 90 - 120°C. Das poröse Flächengebilde kann sowohl vor als auch nach dem Imprägnieren zum Verformen zugeschnitten werden. Zur besseren Entformbarkeit wird mit Trennmitteln gearbeitet. Hierbei können sowohl innere Trennmittel verwendet oder die Form vor Einführung des Flächengebildes mit Trennmittel besprüht werden.

Es ist auch möglich und für viele Anwendungen üblich, die flächigen Polyurethan-Formteile mit Kaschierungen zu versehen. Als Kaschierungen werden beispielsweise offen- und geschlossenzellige Schäume, Fasermatten, Stoffe, Kunststofffolien und ähnliche Materialien verwendet. Die Kaschierungen können auf einer Seite oder auf beiden Seiten der flächigen Polyurethan-Formkörper aufgebracht werden. Die Kaschierung wird üblicherweise aufgebracht, indem zunächst das Kaschiermaterial und danach das imprägnierte flächige Material in die Form gegeben und danach unter Erhitzen das Polyurethan gebildet wird. Dabei erfolgt eine Verbindung des Kaschiermaterials und die Herausbildung einer Sandwich-Struktur. Hierbei kann, insbesondere bei Verwendung von Folien als Kaschiermaterial, gegebenenfalls auf den Einsatz von Trennmitteln verzichtet werden.

Die durch das erfindungsgemäße Verfahren hergestellten flächigen Formteile zeichnen sich durch einen homogenen Aufbau, gute Festigkeiten und eine gleichmäßige Oberfläche aus.

### Beispiele

### Beispiel 1

### Herstellung eines 1-Komponenten-Polyurethan-Systems aus Isopropyliden-Glycerin und Roh-MDI

In einem beheizten Rührkessel wurden zu 75,6 kg Roh-MDI Lupranat® M20W (BASF) und 24,4 kg Isopropylidenglycerin binnen 1 Std. zugegeben.

Die Temperatur wurde dabei auf 80°C gehalten. Nach einer weiteren Stunde wurde die Reaktionsmischung abgekühlt. Der NCO-Gehalt betrug 15,6 Gew-%.

Das Isopropylidenglycerin ist handelsüblich. Es kann auch einfach durch Umsetzung von Glycerin und Aceton hergestellt werden.

### Beispiel 2

### Herstellung des flächigen Formteiles

In ein beheiztes Prüfplattenwerkzeug der Größe 500x200x2 mm wurde eine Flachs-Sisal-Matte mit einem Flächengewicht von 1000 g/m² eingebracht und mit 450 g des Prepolymeren aus Beispiel 1 imprägniert. Die Imprägnierung erfolgte mittels einer Handrolle. Danach wurde die imprägnierte Matte mit Wasser besprüht und 5 Minuten in der Form belassen und verpreßt. Die Formtemperatur betrug 120°C. Danach wurde das Teil entformt.

Das Teil hatte ausgezeichnete mechanische Eigenschaften und eine sehr glatte Oberfläche.

### Beispiel 3

### Herstellung des flächigen Formteils

Es wurde verfahren wie in Beispiel 2, nur wurde die Matte mit einem Gemisch aus 400 g des Prepolymeren aus Beispiel 1 und 50 g eines Prepolymeren aus 4,4'-MDI und Polypropylenglykol mit einem NCO-Gehalt von 23 Gew.-% imprägniert und verpreßt. Die Formtemperatur betrug 130°C. Nach 3 Minuten wurde das Teil entformt. Das Teil hatte ausgezeichnete mechanische eigenschaften und eine sehr galtte Oberfläche.

Das Teil hatte ausgezeichnete mechanische Eigenschaften und eine sehr glatte Oberfläche.

## Patentansprüche

1. Verfahren zur Herstellung von flächigen Polyurethan-Formteilen durch Imprägnierung eines porösen Flächengebildes mit einer Polyurethan-Aufbaukomponente und deren anschließende Umsetzung zum Polyurethan bei gleichzeitiger Formgebung in einer beheizbaren Form, dadurch gekennzeichnet, daß als Polyurethan-Aufbaukomponente ein Prepolymer mit freien Isocyanatgruppen und reversibel verkappten, mit Isocyanatgruppen reaktiven Gruppen, oder mit freien, mit Isocyanatgruppen reaktiven Gruppen und reversibel verkappten Isocyanatgruppen eingesetzt wird.

2. Verfahren nach Anspruch 1, dadurch gekennzeichnet, daß die mit Isocyanatgruppen reaktiven Gruppen Hydroxylgruppen sind.

3. Verfahren nach Anspruch 1, dadurch gekennzeichnet, daß die mit Isocyanatgruppen reaktiven Gruppen primäre oder sekundäre Aminogruppen sind.

4. Verfahren nach Anspruch 2, dadurch gekennzeichnet, daß die Hydroxylgruppen durch Umsetzung mit Ketonen verkappt sind.

5. Verfahren nach Anspruch 4, daß die Hydroxylgruppen mit Aceton verkappt sind.

6. Verfahren nach Anspruch 1, dadurch gekennzeichnet, daß die Isocyanatgruppen durch Uretdionisierung verkappt sind.

7. Verfahren nach Anspruch 1, dadurch gekennzeichnet, daß die freien Isocyanatgruppen oder mit Isocyanat reaktiven Gruppen im stöchiometrischen Verhältnis mit den reversibel verkappten Isocyanatgruppen oder mit Isocyanatgruppen reaktiven Gruppen stehen.

8. Verfahren nach Anspruch 1, dadurch gekennzeichnet, daß die Umsetzung der Prepolymere zu Polyurethanen in Gegenwart von Urethanbildungskatalysatoren durchgeführt wird.

9. Verfahren nach Anspruch 1, dadurch gekennzeichnet, daß die Prepolymere gemeinsam mit anderen Polyurethan-Vorprodukten eingesetzt werden.
